# EUROPEAN PATENT APPLICATION

(11) **EP 1 808 355 A1**
(43) Date of publication of application: **18.07.2007**
(21) Application number: 06425008.7
(22) Date of filing: 12.01.2006
(51) Int. Cl.: B62D 3/12

(54) **Steering group with longitudinally extended support element**

(71) Applicant: TRW ITALIA S.p.A., 25063 Gardone Valtrompia (Brescia) (IT)
(72) Inventor: Morari, Carlo, 25060 Collebeato (Brescia) (IT)
(74) Representative: Crippa, Paolo Ernesto

(57) **Abstract**

The object of the present invention is a steering group (1) for a motor vehicle, comprising a steering box (2), a rack (12), a pinion (10) and support means, suitable for being housed into said steering box (2) for slidingly supporting said rack (12). The support means comprise an axially extended support element (20) and an elastic element (30).

## Description

**.** The object of the present invention is a steering group for a vehicle, comprising a support element of a rack of said steering group.

. Generally, a steering group comprises a steering box, a rack, housed into said steering box, a pinion, engaged with the rack and at least partly protruding from the steering box, and at least one support element housed into said steering box, supporting the rack.

. The steering group is associated to a steering column, connected to the steering wheel of the motor vehicle; in particular, said steering column is engaged with the pinion. The steering group, moreover, is associated to steering axle shafts. In particular, said rack is engaged with said steering axle shafts.

. An example of embodiment of a steering group is disclosed in document GB2397861, by the same Applicant.

. One of the most felt problems in the field of steering groups are the vibrations transmitted by the wheels to the rack and hence to the steering column and thus to the driver. Such vibrations cause a noise often perceived by the driver as a fault.

. Today's trend in the field of steering groups is to attenuate as much as possible the driver's perception of such vibrations, thus obtaining a vehicle provided with higher driving comfort.

. The steering group manufactured according to the present invention contributes to greatly decreasing the rack vibration and the driver's perception of such vibrations.

. Such steering group is manufactured according to the following claim 1. The dependent claims describe embodiment variations.

. The features and advantages of the steering group according to the present invention will appear more clearly from the following description of an embodiment, made by way of an indicative non-limiting example with reference to the annexed drawings, wherein:

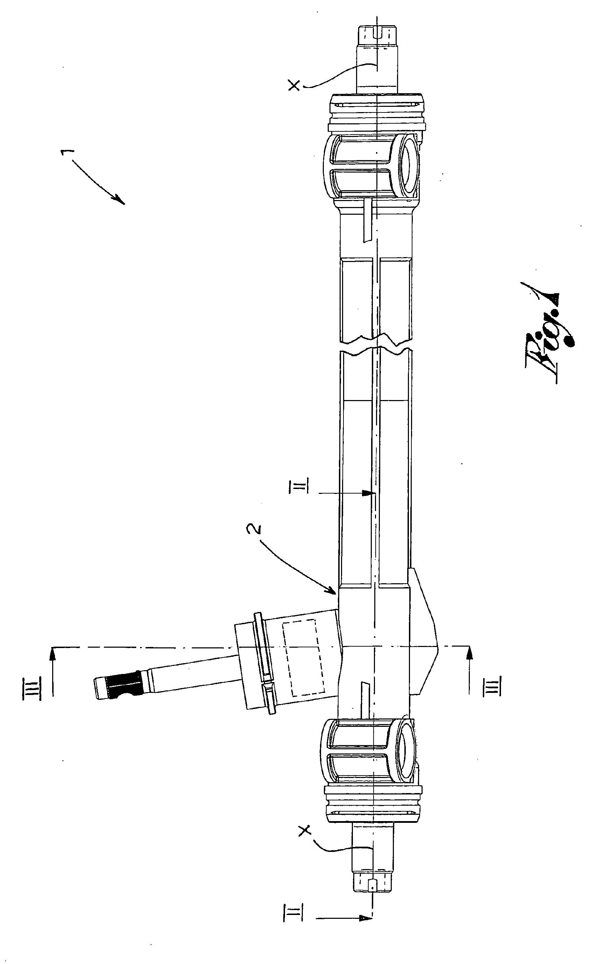

. - figure 1 shows a plan view of a steering group according to the present invention;

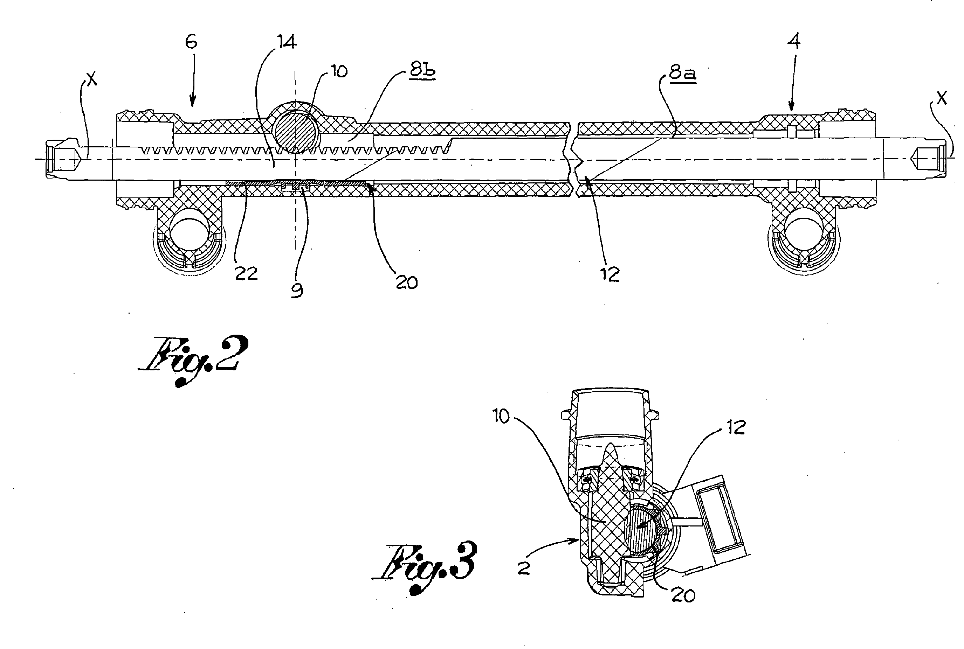

. - figure 2 shows a partial section view of the steering group of figure 1, obtained according to line II - II in figure 1;

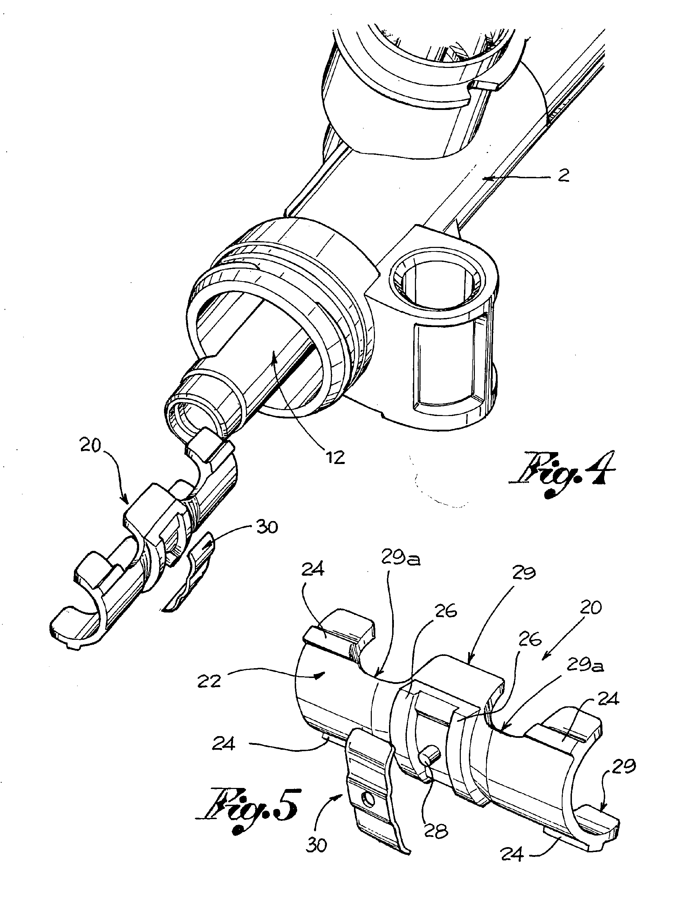

. - figure 3 shows a partial section view of the steering group of figure 1, obtained according to section line III - III in figure 1; and

. - figure 4 shows a perspective exploded view of a portion of the steering group of figure 1.

. With reference to the annexed figures, reference numeral 1 globally denotes a steering group according to the present invention.

. The steering group 1 comprises a steering box 2 suitable for being connected to a frame of a motor vehicle.

. The steering box 2 extends along a longitudinal axis X-X, between a first end portion 4 and a second end portion 6.

. With reference to the direction of the longitudinal axis X-X, in the description below reference shall be made to the radial and circumferential directions associated thereto.

. Internally, said steering box exhibits a through cavity extended along said longitudinal axis X-X. Said internal cavity comprises a first space 8a, at said first end portion 4, and a second space 8b, at said second end portion 6.

. The first space 8a enlarges towards said second space 8b. In other words, the first space 8a exhibits a cross section smaller than the cross section of the second space 8b.

. The internal cavity of the steering box 2, preferably at said second space 8b, exhibits a seating groove 9.

. Preferably, said seating groove 9 extends circumferentially inside said box, preferably at the position wherein said pinion 10 faces the interior of said steering box.

. The steering group 1 further comprises a pinion 10, suitable for being connected, at a first end, to a steering column. Said steering column is intended to be connected to a steering wheel of the motor vehicle.

. The steering group 1 further comprises a rack 12. The steering box 2 is suitable for housing at least partly said rack which, housed in said box, extends along said longitudinal axis X-X.

. Rack 12 comprises, preferably at the ends thereof, connecting portions 10a, 10b suitable for being connected to steering axle shafts of the motor vehicle.

. Rack 12 comprises an engagement portion 14 suitable for engaging with said pinion 10.

. Preferably, said engagement portion, for example toothed, extends by a portion of rack 12, along said longitudinal axis X-X.

. When rack 12 is seated in the steering box 2, the engagement portion 14 is arranged at said second end portion 6, that is, it is housed in the second space 8b of the cavity inside box 2.

. Moreover, said seating groove 9 of the steering box 2 is arranged at the portion wherein said pinion 10 engages with said engagement portion 14 of rack 12.

. Moreover, said second space 8b of the steering box 2 exhibits a recess 19, suitable for housing, at least partly, said pinion 10, for engaging with said rack 12.

. Preferably, said recess 19 is arranged at said groove 9.

. The steering group 1 further comprises support means, suitable for being housed into said steering box 2 and suitable for slidingly supporting said rack 12.

. Said support means preferably comprise a support element 20, preferably made of reinforced polyamide resin.

. Said support element 20, seated in said steering box 2, exhibits a predetermined longitudinal extension.

. Said support element 20 is shaped as a band comprising a substantially semi-circular curved wall 22. Said support element seated in said steering box 2, encloses at least partly said rack 12, thus forming an abutment thereof on the walls of the steering box 2.

. In particular, said curved wall 22 directly abuts on the walls of the steering box, in particular on the walls of the second space 8b of the internal cavity of said box.

. Preferably, said support element 20 comprises at least one abutment projection 24, preferably having a longitudinal prevailing extension. Said abutment projections 24 are radially spaced from one another.

. Said support element 20 further comprises positioning means, suitable for positioning said element inside said steering box 2.

. According to a preferred embodiment, said positioning means comprise at least one positioning projection 26.

. Said positioning projections 26 exhibit a circumferential prevailing extension, are preferably two, preferably longitudinally spaced.

. When the support element 20 is seated into said steering box 2, said positioning projections 26 are seated into said positioning groove 9 of the steering box, thus forming an abutment that prevents the longitudinal movement of said support element.

. According to a preferred embodiment, said support element 20 further comprises a pin 28, externally projecting from the curved wall 22, preferably arranged between said positioning projections 26.

. According to a preferred embodiment, said support element 20 exhibits longitudinal edges 29, that is, edges delimiting the circumferential opening of said support element, comprising span portions 29a forming at least one recess, shaped as a loop, relative to said edges themselves.

. Preferably, each longitudinal edge 29 exhibits two span portions 29a.

. Said support means further comprise an elastic element or spring 30, suitable for being coupled to said support element 20.

. Preferably, said spring 30 is a flat spring, for example of metal material, for example connectable to said pin 28 of the support element 20.

. As it will be understood, said pin is an example of preferred embodiment of connecting means, suitable for connecting said support element 20 to said spring 30.

. In particular, said spring 30 connects to said support element 20 at the space formed by the two positioning projections 26.

. When the support element 20 is housed in the steering box 2, spring 30 arranges in contact with the bottom wall of the positioning groove 9.

. Innovatively, the steering group according to the present invention allows supporting the rack attenuating the vibrations.

. Advantageously, in fact, the contact between the support element and the rack occurs in a longitudinally extended zone: the resulting lever effect contributes to considerably attenuating the rack vibrations.

. Advantageously, moreover, the structure is simple and reliable, characterised by infrequent breakage of the support element or the spring.

. Advantageously, moreover, the support action of the support element on the rack is particularly effective in the portion wherein the pinion engages the rack, opposing the mutual rejecting action that develops between pinion and rack.

. According to a further advantageous aspect, rack and pinion are strongly held in contact, thus limiting the vibrations transmitted from the rack to the pinion.

. Advantageously, moreover, the support element absorbs and compensates the geometrical irregularities or the manufacture tolerances of the steering box, on a longitudinally extended area.

. It is clear that a man skilled in the art may make several changes and adjustments to the steering group described above in order to meet specific and incidental needs, all falling within the scope of protection defined in the following claims.

## Claims

1. A steering group (1) for a motor vehicle, comprising:
- a steering box (2) suitable for being associated to a frame of said motor vehicle, wherein said box (2) comprises an outer annular wall having prevailing extension along a longitudinal axis (X-X);
- a rack (12), housed into said steering box (2), and associable to steering axle shafts of said motor vehicle;
- a pinion (10), engaged with said rack (12) and associable to a steering column of said motor vehicle;
- support means, suitable for being housed into said steering box (2) and suitable for slidingly supporting said rack (12) in said steering box;
said steering group being **characterised in that**
said support means comprise a support element (20) comprising a curved wall (22) arranged between said rack (12) and said steering box (2) and suitable for being moved in abutment with said outer wall of the steering box (2) for supporting said rack.

2. A group according to claim 1, wherein said curved wall (22) of the support element (20) circumferentially encloses, at least partly, said rack (12).

3. A group according to claim 1 or 2, further comprising abutment means suitable for forming an abutment between said support element (20) and said outer wall of the steering box (2).

4. A group according to claim 3, wherein said abutment means comprise at least one abutment projection (24), radially projecting from said curved wall (22).

5. A group according to claim 4, wherein said abutment projection (24) exhibit longitudinal prevailing extension and are radially spaced.

6. A group according to any one of the previous claims, further comprising positioning means suitable for positioning said support element (20) inside said steering box, thus preventing longitudinal movements of said support element (20).

7. A group according to claim 6, wherein said positioning means comprise at least one positioning projection (28), projecting from said curved wall (22), and at least one positioning groove (9) obtained in said outer wall of the box (2) and suitable for seating said positioning projection (9).

8. A group according to claim 7, wherein said positioning projections exhibit circumferential prevailing extension and are longitudinally spaced.

9. A group according to claim 7 or 8, wherein said positioning groove (9) is obtained at the position wherein said pinion (10) engages with said groove (12).

10. A group according to any one of the previous claims, wherein said support means comprise an elastic element (30) suitable for being arranged between said support element (20) and said outer wall of the box (2) for forming an elastic support for said support element (20).

11. A group according to claim 10, comprising connecting means suitable for engaging said support element (20) with said elastic element (30).

12. A group according to claim 12, wherein said connecting means comprise a pin (29) protruding from said curved wall (22) of said support element (20).

13. A group according to any one of the previous claims, wherein said support element (20) is made of a reinforced polyamide resin.

14. A group according to any one of the previous claims, wherein said support element (20) exhibits longitudinal edges (29) having at least one span portion (29a) forming at least one recess.

15. A steering box (2) of a steering group (1) wherein said steering group comprises
- a rack (12) associable to steering axle shafts of said motor vehicle;
- a pinion (10), engaged with said rack (12) and associable to a steering column of said motor vehicle;
- support means suitable for slidingly supporting said rack (12);
wherein said steering box (2) is suitable for seating said rack (12) and said support means and comprises an annular outer wall, having prevailing extension along a longitudinal axis (X-X), which delimits an internal cavity wherein said rack (12) can be seated; said steering box (2) being **characterised in that** said internal cavity exhibits a first space (8a) and a second space (8b), wherein said second space (8b) seats said support means and wherein said second space (8b) exhibits a cross section greater than the section of said first space (8a).

16. A box according to claim 15, wherein said second space (8b) exhibits a groove (9) suitable for positioning the positioning means of said support means.

17. A box according to claim 15 or 16, wherein said second space (8b) comprises a recess suitable for housing, at least partly, said pinion (10) for engaging with said rack (12).

18. A box according to claim 17, wherein said recess is arranged at said groove (9).
